(19) Europäisches Patentamt
European Patent Office
Office européen des brevets

(11) **EP 4 197 870 B1**

(12) **EUROPEAN PATENT SPECIFICATION**

(45) Date of publication and mention
of the grant of the patent:
**12.06.2024 Bulletin 2024/24**

(21) Application number: **22202755.9**

(22) Date of filing: **20.10.2022**

(51) International Patent Classification (IPC):
**B60W 30/18** (2012.01)

(52) Cooperative Patent Classification (CPC):
**B60W 30/18027;** B60W 2540/20; B60W 2540/215;
B60W 2554/4042; B60W 2554/802;
B60W 2554/804; B60W 2555/60; B60W 2720/10;
B60W 2720/106

(54) **DRIVING CONTROL APPARATUS FOR VEHICLE**

FAHRSTEUERUNGSVORRICHTUNG FÜR EIN FAHRZEUG

APPAREIL DE COMMANDE DE CONDUITE POUR VÉHICULE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **16.12.2021 JP 2021204226**

(43) Date of publication of application:
**21.06.2023 Bulletin 2023/25**

(73) Proprietor: **Suzuki Motor Corporation
Hamamatsu-shi, Shizuoka 432-8611 (JP)**

(72) Inventor: **KUBOTA, Hitoshi
HAMAMATSU-SHI, 432-8611 (JP)**

(74) Representative: **Plasseraud IP
66, rue de la Chaussée d'Antin
75440 Paris Cedex 09 (FR)**

(56) References cited:
**DE-A1-102019 105 101     US-A1- 2019 375 412
US-A1- 2020 302 797**

**Description**

[Technical Field]

The present invention relates to a driving control apparatus for a vehicle, and more particularly, relates to a control that causes a vehicle to start moving from a state of being stopped on a road shoulder.

[Background Art]

Various driving control systems are being put into practical use for purposes of reducing the burden on drivers and supporting safe driving. For example, Patent Literature 1 discloses, as a driving assistance method that predicts the surrounding conditions of a vehicle and assists with driving based on a prediction result, a method for detecting other vehicles positioned behind the vehicle, predicting the movement of the vehicles behind based on the environment in which the vehicles behind are located, and causes the vehicle to start moving or to wait for the vehicle behind to pass.

Patent Literature 2 discloses a vehicle control system and a vehicle control method implementing the following steps. An event determiner identifies an event executed at the current time point among a plurality of events planned as an action plan and determines whether or not the identified event is a lane-changing event. In a case in which the identified event is not a lane-changing event, the process ends.

In a case in which the identified event is the lane-changing event, the event determiner determines whether or not a surrounding vehicle positioned to the rear of the subject vehicle (reference vehicle) is present on a lane that is a destination of the lane change designated in the lane-changing event among surrounding vehicles recognized by the external system recognizer.

In a case in which there is no reference vehicle, the event determiner determines that the lane-changing event can be executed. Next, the trajectory generator generates a target trajectory for moving the subject vehicle from its own lane to a lane designated in the lane-changing event.

In a case in which it is determined that there is a reference vehicle, the event determiner determines whether or not a degree of braking predicted to be generated in the reference vehicle due to lane change of the subject vehicle is equal to or higher than a threshold.

[Citation List]

[Patent Literature]

[Patent Literature 1] JP 2018-197966 A
[Patent Literature 2] US 2019/375412 A1

[Summary of Invention]

[Problem to be Solved by the Invention]

However, since the detection range of a sensor is limited and road conditions are diverse, if a vehicle behind approaching at high speed from outside the detection range of a sensor appears after causing the vehicle to start moving, problems such as provoking sudden braking by the vehicle behind may occur.

The present invention has been devised in light of circumstances like the above, and an objective thereof is to provide a driving control apparatus that can execute a control causing a vehicle to start moving from a state of being stopped on a shoulder without overly depending on sensor detection performance and while keeping the influence on traffic flow to a minimum.

[Means for Solving the Problems]

In order to solve the above-described problems, the present invention is

a driving control apparatus for a vehicle configured to recognize a course environment based on detection information from an external sensor to generate a target path, and to perform a speed control and a steering control causing the vehicle to follow the target path, including
a starting mode configured to start moving of the vehicle from a state of being stopped on a road shoulder, comprising:

(i) in a case in which another vehicle is detected in a rear detection range of the external sensor, waiting for the other vehicle to pass if a deceleration estimated as necessary for the other vehicle due to the start of movement by the vehicle is equal to or greater than a prescribed threshold value, and starting the vehicle if the deceleration estimated as necessary for the other vehicle is less than the prescribed threshold value; and

(ii) in a case in which another vehicle is not detected in the rear detection range, executing a first step including: setting the target path to a first lateral position closer to the shoulder than a current lane center; and starting the vehicle to accelerate with driving along the first lateral position, and thereafter executing a second step including: setting the target path to a second lateral position toward the current lane center in a state in which the vehicle has accelerated to a predetermined speed; and switching the vehicle to driving with keeping the second lateral position.

[Advantageous Effects of Invention]

By including a starting mode like the above, the driving control apparatus for a vehicle according to the present invention can maximize the opportunity to start moving without provoking sudden braking by another vehicle, even if another vehicle is detected in the rear detection range, and in addition, in the case in which another vehicle is not detected in the rear detection range, the vehicle accelerates while driving along a first lateral position close to the road shoulder immediately after starting to move, and thus, even if a vehicle behind approaching at high speed appears in the sensor detection range after the vehicle starts moving, driving space near the lane center is secured, and moreover, since the vehicle can decelerate from the first lateral position near the shoulder and immediately come to a stop on the shoulder, sudden braking by the vehicle behind can be avoided, and the vehicle can be made to start moving without overly depending on sensor detection performance and while keeping the influence on traffic flow to a minimum.

[Brief Description of Drawings]

[Figure 1] Figure 1 is a block diagram illustrating a driving control apparatus for a vehicle.
[Figure 2] Figure 2 is a schematic diagram illustrating a starting mode from a state of being stopped on the shoulder.
[Figure 3] Figure 3 is a schematic diagram illustrating a speed estimation of a virtual approaching vehicle after starting to move.
[Figure 4] Figure 4 is a flowchart illustrating a starting mode.
[Figure 5] Figure 5(a) is a graph illustrating the speed of the vehicle and an estimated speed of a virtual approaching vehicle, and Figure 5(b) is a graph illustrating the estimated inter-vehicle distance between the vehicle and the virtual approaching vehicle.

[Mode for Carrying Out the Invention]

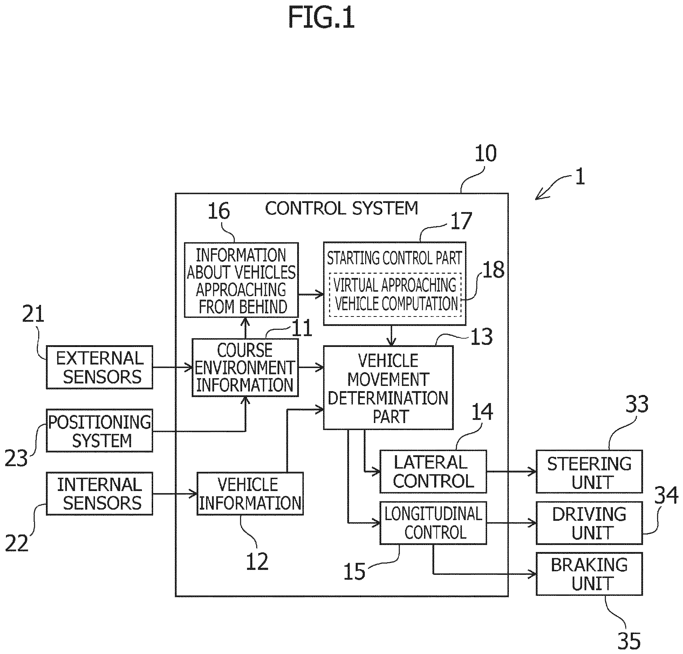

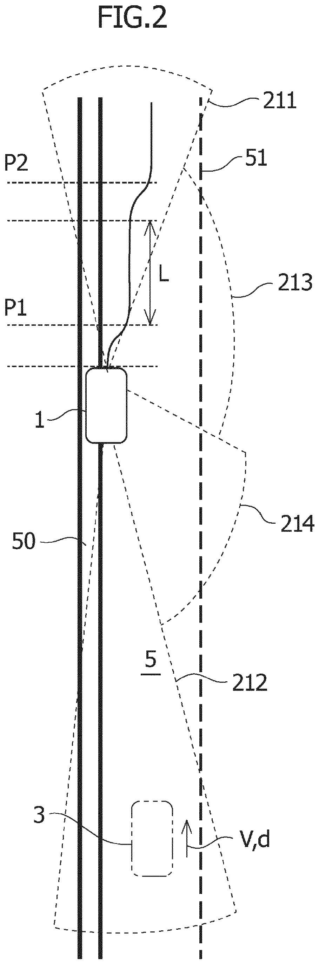

Hereinafter, an embodiment of the present invention will be described in detail with reference to the drawings.
As illustrated in Figure 1, the driving control apparatus for a vehicle 1 is provided with: an input device group including external sensors 21, internal sensors 22, a positioning system 23, and the like; and a control system 10 including a vehicle movement determination part 13 that determines a target path for the vehicle 1 based on course environment information 11 and vehicle information 12 obtained via the input device group, and executes a lateral control 14 and a longitudinal control 15.
The external sensors 21 include a sensor group selected from forward and rear radars (millimeter wave radars) that detect an object (position, relative speed) in front of and behind the vehicle, an image sensor such as a monocular camera or a stereo camera that captures the course environment in front of and behind the vehicle, a LIDAR (laser scanner) that acquires the course environment around the vehicle as a 3D point cloud data, and the like.
For example, as illustrated in Figure 2, the external sensors 21 include a forward sensor 211 (radar, image sensor, or laser scanner), a rear sensor 212 (radar, image sensor), and a front side sensor 213 and a rear side sensor 214 (radar, image sensor, or laser scanner) which are illustrated only on the right side in Figure 2, the sensors being arranged such that the surroundings of the vehicle 1 are included in the detection range.
The internal sensors 22 include a plurality of sensor groups that determine the movement state of the vehicle 1, such as a vehicle speed sensor, an acceleration sensor, a yaw rate sensor, a steering angle sensor, an accelerator pedal position sensor, and a brake sensor, and the detection values therefrom are acquired by the control system 10 via in-vehicle communication (an in-vehicle network) to form the vehicle information 12 as state values indicating the current driving state of the vehicle 1.
The positioning system 23 is implemented as a satellite positioning system (GNSS sensor) for acquiring position information about the vehicle 1, and is used in conjunction with map data and traffic information to form a driving planning system (navigation system) that provides route guidance based on a driving plan. Traffic information such as lane closures and speed limits related to the position information is acquired through broadcast information delivery such as VICS, vehicle-to-infrastructure (V2I) communication such as ETC, mobile communication using a cellular communication network, and the like, and furthermore, information about signals and traffic signs is acquired from information detected by the external sensors 21.

The driving planning system provides route guidance based on a driving plan determined in advance by referencing related traffic information based on destination and waypoint information inputted using an HMI device, a wireless communication terminal, or the like, and designates a scene-dependent driving mode for performing autonomous driving in accordance with traffic regulations, such as speed control, lane-keeping and inter-vehicle distance keeping, lane changing, merging and diverging, making left and right turns, and the like.

The control system 10 is provided with a course environment estimation unit that constructs course environment information 11 updated at a prescribed frame rate through road structure recognition that recognizes the road structure (such as road lane markings, guard rails, and central dividers) from image data or 3D point cloud data acquired by the external sensors 21 and through detection, by radar, of preceding vehicles and obstacles ahead in the current lane.

The control system 10 is provided with the vehicle movement determination part 13 that generates a target path based on the course environment information 11 and the vehicle information 12, and is provided with, as control units, a lateral control unit 14 that outputs, to a steering unit 33, a steering angle command supplying a target steering angle causing the vehicle 1 to follow the target path and a longitudinal control unit 15 that outputs, to a driving unit 34 and a braking unit 35, a speed command (acceleration/deceleration command) for achieving a target speed.

The vehicle movement determination part 13 includes driving modes such as speed control and inter-vehicle distance keeping control, lane-keeping driving, lane changing, merging and diverging, and left and right turning based on the course environment information 11 and the vehicle information 12, and is configured to execute a vehicle driving control optimized for each driving scene as well as associated turn signal on/off control and the like.

For example, the course environment estimation unit that constructs the course environment information 11 has a function of recognizing the lane (driving lane) of the vehicle 1 based on image data or 3D point cloud data acquired by the forward sensor 211 included among the external sensors 21, and also estimating the center (center line) of the lane (driving lane) from road lane markings (or an alternative structure) on either side of the driving lane, while the vehicle movement determination part 13 executes lane center-keeping driving by setting the target path in the lane center and performing steering control.

Also, the course environment estimation unit that constructs the course environment information 11 has a function of recognizing the road lane markings (or an alternative structure) of an adjacent lane and estimating the center of the adjacent lane, and the vehicle movement determination part 13 executes a lane change by setting the target path ahead and in the center of the adjacent lane and performing steering control in a state in which another vehicle is confirmed not to exist in a predetermined range of the adjacent lane in the course environment information 11.

Furthermore, the control system 10 is provided with a starting control part 17 for causing the rear sensor 212 (rear radar) included among the external sensors 21 to detect other vehicles approaching from behind in the current lane, and executing a starting mode that causes the vehicle 1 to start moving from the road shoulder based on information about vehicles approaching from behind 16. The starting mode will be described later.

Each control unit forming the control system 10 as described above is implemented as a computer (ECU) provided with a ROM (flash memory) that stores a program that can be run to execute each of the functions, a CPU that performs computational processing, RAM into which the program is loaded and which serves as a work area of the CPU and a temporary storage area for computational results, and an input-output interface.

Note that the steering unit 33 is provided with a steering mechanism including a steering wheel and a steering actuator (EPS motor forming an electric power steering system). The driving unit 34 is provided with an internal combustion engine and an engine controller in the case of an internal combustion engine vehicle, a motor generator and a motor controller in the case of an electric vehicle, or the above and a hybrid controller in the case of a hybrid vehicle. The braking unit 35 is provided with a brake apparatus, a brake actuator, a brake controller (ABS/ESC controller), and the like for braking each wheel.

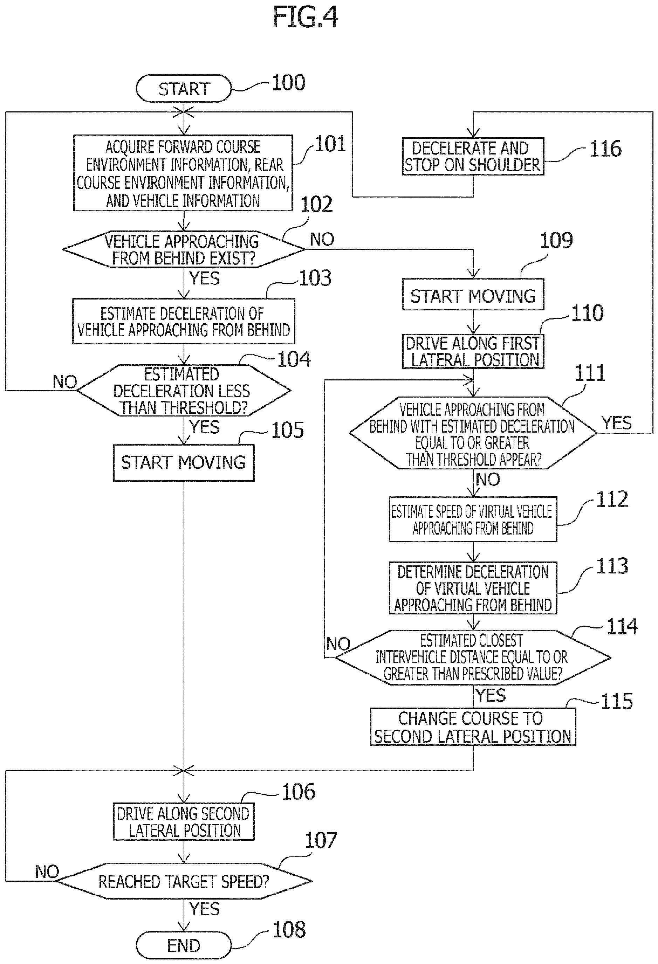

Figure 4 is a flowchart illustrating the flow of a process in the starting mode from a state of being stopped on a road shoulder. Hereinafter, the starting mode will be described in detail with reference to the flowchart.

In the case of causing the vehicle 1 to start moving from a state of being stopped on a shoulder 50 as illustrated in Figure 2, when a driver or a user of the vehicle 1 performs a trigger operation (such as a turn signal lever operation or a touch panel operation) indicating the intent to start moving, or when starting preparations in the vehicle 1 are determined to be complete based on detection information such as an in-vehicle monitor, the control switches to the starting mode and starts blinking the turn signal to indicate to the traffic flow the intent for the vehicle 1 to start moving (step 100).

At the same time, traffic information such as lane closures and speed limits related to position information about the vehicle 1 acquired by the positioning system 23 is acquired, and based on forward course environment information acquired by the forward sensor 211 and the front side sensor 213 included among the external sensors 21, a detection of other vehicles or obstacles on the forward course of the vehicle 1 is executed, and based on rear course environment information acquired by the rear sensor 212 (rear radar) included among the external sensors 21, a detection of a vehicle approaching from behind in the current lane 5 is executed (step 101).

(1) Case in which vehicle behind is detected

If a vehicle 3 approaching from behind is detected in a state in which an obstacle or a specific driving scene that would impede the start of movement on the course ahead is confirmed not to exist (step 102; YES), the deceleration d necessary for the vehicle behind 3 until the vehicle 1 accelerates up to a target speed after starting to move is estimated from the speed V and the distance (inter-vehicle time) of the vehicle behind 3 detected by the rear sensor 212 (rear radar) (step 103).

(1-1) If the deceleration d estimated as necessary for the vehicle behind 3 due to the start of movement by the vehicle 1 is determined to be not less than a prescribed value, or in other words, equal to or greater than a prescribed threshold value (step 104; NO), the vehicle 1 is made to stand by without starting to move until the vehicle behind 3 passes, and the flow returns to step 101 after confirming the passing of the vehicle behind 3 based on detection information from the external sensors 21 and restarts the movement of the vehicle 1.

(1-2) If the deceleration d estimated as necessary for the vehicle behind 3 due to the start of movement by the vehicle 1 is determined to be less than the prescribed value (step 104; YES), the vehicle 1 is made to start moving (step 105).

In this case, it is not necessary for the vehicle behind 3 to decelerate suddenly during the time it takes for the vehicle 1 to start moving and accelerate up to a target speed at a predetermined acceleration, and due to the presence of the vehicle behind 3, another vehicle approaching suddenly from behind the detection range of the rear sensor 212 (rear radar) would not exist, and therefore, after the vehicle 1 starts to move, the target path is set to the lane center (second lateral position P2), and the vehicle 1 accelerates while driving down the lane center (step 106).

After that, the starting mode ends when the target speed is reached (step 107; YES), and the control switches to a normal driving mode (step 108). Note that in the case of catching up to a preceding vehicle before the target speed is reached, the control switches to following the preceding vehicle while maintaining a prescribed inter-vehicle time.

(2) Case in which vehicle behind is not detected

If an obstacle or a specific driving scene that would impede the start of movement on the course ahead is confirmed not to exist and a vehicle approaching from behind is not detected (step 102; NO), as illustrated in Figure 2, first, the vehicle 1 is made to start moving with the target path set to a first lateral position P1 closer to the shoulder 50 than the current lane center (step 109), and the vehicle 1 accelerates while driving along the first lateral position P1 (step 110).

The first lateral position P1 is determined based on the course environment information 11 such that the center of the vehicle 1 is kept a prescribed distance consisting of 1/2 the vehicle width and a margin with respect to the shoulder 50 (outer line) of the current lane 5, or is determined as a prescribed lateral deflection (offset) with respect to the current lane center such that the margin is secured.

(2-1) Immediately after the vehicle 1 starts moving or while the vehicle 1 is driving along the first lateral position P1, if a vehicle behind approaching at high speed in the detection range of the rear sensor 212 (rear radar) appears, and the deceleration estimated as necessary for the vehicle behind until the vehicle 1 accelerates to the target speed from the speed and distance (inter-vehicle time) of the vehicle behind is determined to be equal to or greater than a prescribed value (step 111; YES), the target path is set toward the shoulder 50, the vehicle 1 is made to decelerate and stop on the shoulder 50 (step 116), the vehicle behind is allowed to pass, and after confirming the passing of the vehicle behind according to detection information from the external sensors 21, the flow returns to step 101 and restarts the movement of the vehicle 1.

(2-2) On the other hand, after the vehicle 1 starts moving and is driving along the first lateral position P1, in a state in which another vehicle approaching suddenly from behind is not detected, a virtual approaching vehicle is assumed, and by executing a virtual approaching vehicle computation 18, a changeover time for switching from driving along the first lateral position P1 to the second lateral position P2 (or the lane center) is determined dynamically.

In other words, the speed Vv of the virtual approaching vehicle is estimated based on the course environment (step 112), the virtual approaching vehicle computation 18 that calculates the closest approach distance to the vehicle 1 if the virtual approaching vehicle decelerates from the estimated speed Vv by a predetermined deceleration dv is executed (step 113), and when the closest inter-vehicle distance becomes equal to or greater than a prescribed value (step 114; YES), the target path is set to the second lateral position P2 toward the lane center and the course is changed to the second lateral position P2 (or the lane center) (step 115).

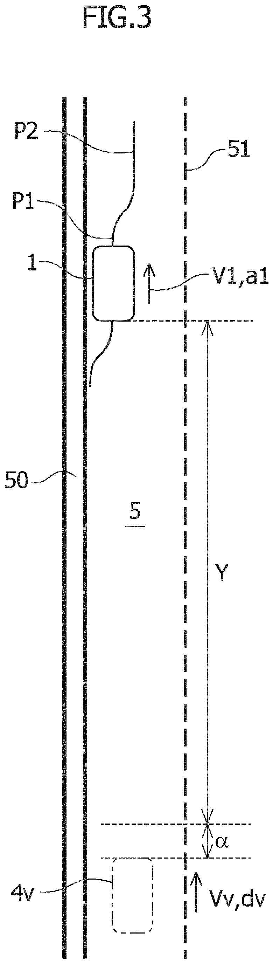

For example, as illustrated in Figure 3, for the vehicle 1 driving along the first lateral position P1 at a speed V1 and an acceleration a1, the estimated speed Vv of a virtual approaching vehicle 4v driving at a position Y+α with respect to the detection range Y+α of the rear sensor 212 (rear radar) of the vehicle 1 is determined according to the following formula from a speed limit Z and a variable element β for the course environment.

$$\text{Estimated speed Vv} = \text{speed limit Z} + \text{variable element } \beta$$

Here, the speed limit Z for the course environment is acquired by cross-referencing the position information about the vehicle 1 acquired by the positioning system 23 with map data or traffic information.

With regard to the variable element β that is dependent on the course environment, values like the following are assumed, for example. The variable element β (km/h) may be treated as the maximum value of each element or as a matrix of dimensionality equal to the number of elements. Also, a leading element may be selected for each driving scene.

Road shape: straight β=30; curved β=20
Road category: community road β=20; highway β=30
Number of lanes: one lane β=20; two lanes β=30
Road width: less than 3m β=20; 3m or more β=30

The closest approach distance Dm to the vehicle 1 in the case in which the virtual approaching vehicle 4v driving at the estimated speed Vv as described above decelerates by the deceleration dv which is not dangerous (for example, -0.05 G corresponding to engine braking or -0.1 G corresponding to weak braking) is calculated, and the vehicle 1 continues driving along the first lateral position P1 while the closest approach distance Dm is less than a safe inter-vehicle distance Ds, and moves to the second lateral position P2 when the closest approach distance Dm becomes equal to or greater than the safe inter-vehicle distance Ds.

If the closest approach distance Dm becomes equal to or greater than the safe inter-vehicle distance Ds, the safe inter-vehicle distance Ds can be maintained without requiring sudden deceleration, even if a vehicle behind approaching from outside the detection range of the rear sensor 212 (rear radar) appears, and therefore, it is inferred that changing course to the second lateral position P2 toward the current lane center would not affect the traffic flow.

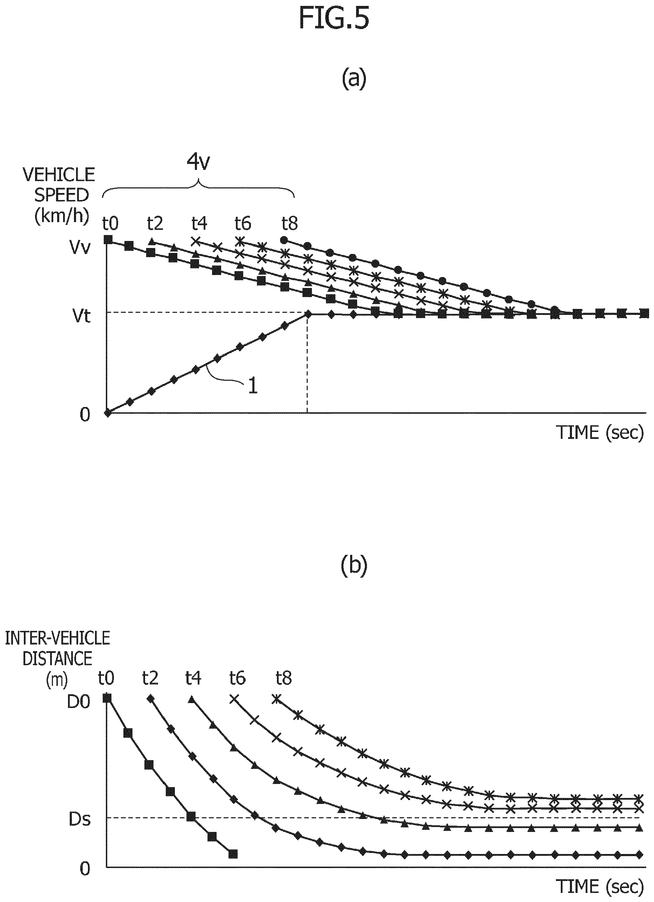

For example, as illustrated in Figure 5(a), suppose that in the case in which the vehicle 1 accelerates by +0.111 G to the speed Vt = 40 km/h, the virtual approaching vehicle 4v decelerates by a deceleration dv = -0.06 G corresponding to engine braking to the speed Vt = 40 km/h from a state of driving at the speed Vv = 70 km/h at a rear position corresponding to the detection range D0 = 80 m of the rear sensor 212.

The timing t0 illustrates the case in which the virtual approaching vehicle 4v starts decelerating at the same time as when the vehicle 1 starts moving, while the timings t2 to t8 illustrate the respective cases when the vehicle 1 starts moving 2 to 8 seconds later. As illustrated in Figure 5(b), if the vehicle 1 starts driving along the first lateral position P1 and then moves to the second lateral position P2 5 seconds later, the safe inter-vehicle distance Ds = 22 m can be ensured for the closest approach distance Dm.

Note that the vehicle 1 may also be configured to execute the move from the first lateral position P1 to the second lateral position P2 (or the lane center) when the vehicle 1 has accelerated to the target speed or to a speed that is a predetermined ratio of the target speed (for example, 90% of the target speed).

According to the starting mode according to the present invention as described above, even if a vehicle behind is detected in the detection range of the rear sensor 212, the opportunity to start moving can be secured to the maximum degree without provoking sudden braking by the vehicle behind.

On the other hand, in the case in which a vehicle behind is not detected in the detection range of the rear sensor 212, the vehicle 1 accelerates immediately after starting to move while driving along the first lateral position P1 close to the shoulder 50, and thus, even if a vehicle behind approaching at high speed appears in the detection range of the rear sensor 212 after the start of movement, the vehicle 1 can decelerate from the first lateral position P1 close to the shoulder 50 and immediately stop on the shoulder 50, thereby leaving enough space for steering avoidance near the center of the lane 5 and avoiding sudden braking by the vehicle behind.

In particular, there is an advantage in being able to cope with situations in which the detection range of the rear sensor 212 is limited, such as when a curve with poor visibility (blind corner) or a stopped vehicle exists behind the vehicle, and situations in which a vehicle behind appears by changing lanes from an adjacent lane.

Also, a virtual approaching vehicle 4v approaching from outside the detection range of the rear sensor 212 is assumed while driving along the first lateral position P1, and the vehicle 1 moves to the second lateral position P2 toward the lane center when the closest inter-vehicle distance Dm between the virtual approaching vehicle 4v and the vehicle 1, which is calculated from the estimated speed Vv and deceleration dv of the virtual approaching vehicle 4v determined based on the course environment and from the speed V1 and acceleration a1 of the vehicle 1, becomes equal to or greater than the safe inter-vehicle distance Ds, and thus, the vehicle 1 can move to the second lateral position P2 at an appropriate timing according to the course environment, and keep the driving along the first lateral position P1 to a minimum.

Consequently, according to the driving control apparatus according to the present invention, the vehicle 1 can be made to start moving without overly depending on the detection performance of the rear sensor 212 and while keeping the influence on traffic flow to a minimum.

The embodiment of the present invention has been described above, but the present invention is not limited to the foregoing embodiment, and various modifications and changes can be made within the scope of the claims.

[Reference Signs List]

1      Vehicle
3      Vehicle behind
4v     Virtual approaching vehicle
5      Lane (driving lane)
10     Control system
11     Course environment information
12     Vehicle information
13     Vehicle movement determination part
14     Lateral control unit
15     Longitudinal control unit
16     Information about vehicles approaching from behind
17     Starting control unit
18     Virtual approaching vehicle computation
21     External sensors
22     Internal sensors
23     Positioning system
50     Shoulder

**Claims**

1.  A driving control apparatus (10) for a vehicle (1) configured to recognize a course environment based on detection information from an external sensor (21) to generate a target path, and to perform a speed control and a steering control causing the vehicle (1) to follow the target path, including
    a starting mode configured to start moving the vehicle (1) from a state of being stopped on a shoulder (50), comprising:

    (i) in a case in which another vehicle (3) is detected in a rear detection range of the external sensor (21), waiting for the other vehicle (3) to pass if a deceleration estimated as necessary for the other vehicle (3) due to the start of movement by the vehicle (1) is equal to or greater than a prescribed threshold value, and starting the vehicle (1) if the deceleration estimated as necessary for the other vehicle (3) is less than the prescribed threshold value; and
    (ii) in a case in which another vehicle is not detected in the rear detection range, executing a first step including: setting the target path to a first lateral position (P1) closer to the shoulder (50) than a current lane center; and starting the vehicle (1) to accelerate with driving along the first lateral position (P1), and thereafter executing a second step including: setting the target path to a second lateral position (P2) toward the current lane center in a state in which the vehicle (1) has accelerated to a predetermined speed; and switching the vehicle (1) to driving with keeping the second lateral position (P2).

2.  The driving control apparatus (10) for a vehicle (1) according to claim 1, wherein the starting mode is configured such that, in a case in which a second other vehicle approaching from behind is detected during the driving in the first step, the vehicle (1) continues to accelerate if a deceleration estimated as necessary for the second other vehicle from a driving state of the vehicle (1) and a speed of the second other vehicle is less than a prescribed threshold value, whereas if the deceleration estimated as necessary for the second other vehicle is equal to or greater than the prescribed threshold value, the target path is changed toward the shoulder (50) and the vehicle (1) is made to decelerate, come to a stop, and wait for the second other vehicle to pass.

3. The driving control apparatus (10) for a vehicle (1) according to claim 1 or 2, wherein, in a state in which another vehicle approaching from behind is not detected during the driving in the first step, the starting mode assumes a virtual approaching vehicle (4v) approaching from outside the rear detection range, and if a closest inter-vehicle distance between the virtual approaching vehicle (4v) and the vehicle (1), which is calculated from a speed and deceleration of the virtual approaching vehicle (4v) determined based on the course environment and from a speed and acceleration of the vehicle (1), becomes equal to or greater than a prescribed value, the starting mode executes the second step even if the vehicle (1) is less than the predetermined speed.

4. The driving control apparatus (10) for a vehicle (1) according to claim 3, wherein the speed of the virtual approaching vehicle (4v) determined based on the course environment is determined from a speed limit for the course environment and a variable element dependent on the course environment, the variable element being at least one selected from the group consisting of a road shape, a road category, a number of lanes, and a road width.

5. The driving control apparatus (10) for a vehicle (1) according to any one of claims 1-4, wherein the second lateral position (P2) is the lane center.

**Patentansprüche**

1. Fahrsteuerungsvorrichtung (10) für ein Fahrzeug (1), welche dazu eingerichtet ist, eine Kursumgebung auf Grundlage von Detektionsinformationen von einem externen Sensor (21) zu erkennen, um einen Zielpfad zu erzeugen, und eine Geschwindigkeitssteuerung sowie eine Lenksteuerung durchzuführen, welche das Fahrzeug (1) dazu veranlasst, dem Zielpfad zu folgen, umfassend
einen Startmodus, welcher dazu eingerichtet ist, eine Bewegung des Fahrzeugs (1) von einem an einem Standstreifen (50) gestoppten Zustand zu starten, umfassend:

(i) in einem Fall, in welchem ein weiteres Fahrzeug (3) in einem Rückdetektionsbereich des externen Sensors (21) detektiert wird, Warten auf ein Vorbeifahren des weiteren Fahrzeugs (3), falls eine Geschwindigkeitsabnahme, welche aufgrund des Starts einer Bewegung des Fahrzeugs (1) für das weitere Fahrzeug (3) als notwendig eingeschätzt wird, gleich wie oder größer als ein vorgeschriebener Schwellenwert ist, und Starten des Fahrzeugs (1), falls die Geschwindigkeitsabnahme, welche für das weitere Fahrzeug (3) als notwendig eingeschätzt wird, geringer als der vorgeschriebene Schwellenwert ist; und
(ii) in einem Fall, in welchem ein weiteres Fahrzeug (3) nicht in dem Rückdetektionsbereich detektiert wird, Ausführen eines ersten Schrittes, umfassend: Festlegen des Zielpfades auf eine erste laterale Position (P1), welche näher an dem Standstreifen (50) ist als eine gegenwärtige Fahrspurmitte, und Starten des Fahrzeugs (1), um beim Fahren entlang der ersten lateralen Position (P1) zu beschleunigen, und danach, Ausführen eines zweiten Schrittes, umfassend: Festlegen des Zielpfades auf eine zweite laterale Position (P2) in Richtung der gegenwärtigen Fahrspurmitte in einem Zustand, in welchem das Fahrzeug (1) auf eine vorbestimmte Geschwindigkeit beschleunigt hat; und Schalten des Fahrzeugs (1) auf ein Fahren, bei welchem die zweite laterale Position (P2) gehalten wird.

2. Fahrsteuerungsvorrichtung (10) für ein Fahrzeug (1) nach Anspruch 1, wobei der Startmodus derart eingerichtet ist, dass, in einem Fall, in welchem ein zweites weiteres Fahrzeug, welches sich von hinten nähert, während des Fahrens in dem ersten Schritt detektiert wird, das Fahrzeug (1) eine Beschleunigung fortführt, falls eine Geschwindigkeitsabnahme, welche von einem Fahrzustand des Fahrzeugs (1) für das zweite weitere Fahrzeug als notwendig eingeschätzt wird, und eine Geschwindigkeit des zweiten weiteren Fahrzeugs geringer als ein vorgeschriebener Schwellenwert ist, wohingegen der Zielpfad in Richtung des Standstreifens (50) geändert wird und das Fahrzeug (1) zur Geschwindigkeitsabnahme gebracht wird, zu einem Halt kommt und auf ein Vorbeifahren des zweiten weiteren Fahrzeugs wartet, falls die Geschwindigkeitsabnahme, welche für das zweite weitere Fahrzeug als notwendig eingeschätzt wird, gleich wie oder größer als der vorgeschriebene Schwellenwert ist.

3. Fahrsteuerungsvorrichtung (10) für ein Fahrzeug (1) nach Anspruch 1 oder 2, wobei, in einem Zustand, in welchem ein weiteres Fahrzeug, welches sich von hinten nähert, während des Fahrens in dem ersten Schritt nicht detektiert wird, der Startmodus ein virtuelles, sich näherndes Fahrzeug (4v) annimmt, welches sich von außerhalb des Rückdetektionsbereichs nähert, und, falls ein kürzester Zwischenfahrzeugabstand zwischen dem virtuellen, sich nähernden Fahrzeug (4v) und dem Fahrzeug (1), welcher aus einer Geschwindigkeit und einer Geschwindigkeitsabnahme des virtuellen, sich nähernden Fahrzeugs (4v), welche auf Grundlage der Kursumgebung bestimmt werden, und aus einer Geschwindigkeit und einer Beschleunigung des Fahrzeugs (1) berechnet wird, gleich wie oder größer als ein vorgeschriebener Schwellenwert wird, der Startmodus den zweiten Schritt ausführt, sogar falls das Fahrzeug (1) weniger als die vorbestimmte Geschwindigkeit aufweist.

**4.** Fahrsteuerungsvorrichtung (10) für ein Fahrzeug (1) nach Anspruch 3, wobei die Geschwindigkeit des virtuellen, sich nähernden Fahrzeugs (4v), welche auf Grundlage der Kursumgebung bestimmt wird, aus einer Geschwindigkeitsbegrenzung für die Kursumgebung und einem variablen Element bestimmt wird, welches von der Kursumgebung abhängt, wobei das variable Element wenigstens eines ist, ausgewählt aus der Gruppe, welche aus einer Straßenform, einer Straßenkategorie, einer Anzahl an Fahrspuren und einer Straßenbreite besteht.

**5.** Fahrsteuerungsvorrichtung (10) für ein Fahrzeug (1) nach einem der Ansprüche 1-4, wobei die zweite laterale Position (P2) die Fahrspurmitte ist.

## Revendications

**1.** Appareil de commande de conduite (10) pour un véhicule (1) configuré pour reconnaître un environnement de course sur la base d'informations de détection provenant d'un capteur externe (21) pour générer un trajet cible, et pour réaliser une commande de vitesse et une commande de direction amenant le véhicule (1) à suivre le trajet cible, comportant
un mode de démarrage configuré pour démarrer le déplacement du véhicule (1) à partir d'un état d'arrêt sur un épaulement (50), comprenant :

   (i) dans un cas dans lequel un autre véhicule (3) est détecté dans une plage de détection arrière du capteur externe (21), l'attente que l'autre véhicule (3) passe si une décélération estimée comme étant nécessaire pour l'autre véhicule (3) en raison du début de mouvement par le véhicule (1) est égale ou supérieure à une valeur seuil prescrite, et le démarrage du véhicule (1) si la décélération estimée comme étant nécessaire pour l'autre véhicule (3) est inférieure à la valeur seuil prescrite ; et

   (ii) dans un cas dans lequel un autre véhicule n'est pas détecté dans la plage de détection arrière, l'exécution d'une première étape comportant : le réglage du trajet cible sur une première position latérale (P1) plus proche de l'épaulement (50) qu'un centre de voie actuel ; et le démarrage du véhicule (1) pour son accélération tout en conduisant le long de la première position latérale (P1), puis l'exécution d'une seconde étape comportant : le réglage du trajet cible sur une seconde position latérale (P2) en direction du centre de voie actuel dans un état dans lequel le véhicule (1) a accéléré à une vitesse prédéterminée ; et la commutation du véhicule (1) vers la conduite tout en maintenant la seconde position latérale (P2).

**2.** Appareil de commande de conduite (10) pour un véhicule (1) selon la revendication 1, dans lequel le mode de démarrage est configuré de sorte que, dans un cas dans lequel un second autre véhicule s'approchant par l'arrière est détecté pendant la conduite dans la première étape, le véhicule (1) continue à accélérer si une décélération estimée comme étant nécessaire pour le second autre véhicule à partir d'un état de conduite du véhicule (1) et une vitesse du second autre véhicule est inférieure à une valeur seuil prescrite, tandis que la décélération estimée comme étant nécessaire pour le second autre véhicule est égale ou supérieure à la valeur seuil prescrite, le trajet cible est modifié en direction de l'épaulement (50) et le véhicule (1) est amené à décélérer, à s'arrêter, et à attendre que le second autre véhicule passe.

**3.** Appareil de commande de conduite (10) pour un véhicule (1) selon la revendication 1 ou 2, dans lequel, dans un état dans lequel un autre véhicule s'approchant par l'arrière n'est pas détecté pendant la conduite dans la première étape, le mode de démarrage présume qu'un véhicule à l'approche virtuel (4v) s'approche depuis l'extérieur de la plage de détection arrière, et si une distance inter-véhicules la plus proche entre le véhicule à l'approche virtuel (4v) et le véhicule (1), qui est calculée à partir d'une vitesse et d'une décélération du véhicule à l'approche virtuel (4v) déterminées sur la base de l'environnement de course et d'une vitesse et d'une accélération du véhicule (1), devient égale ou supérieure à une valeur prescrite, le mode de démarrage exécute la seconde étape même si la vitesse du véhicule (1) est inférieure à la vitesse prédéterminée.

**4.** Appareil de commande de conduite (10) pour un véhicule (1) selon la revendication 3, dans lequel la vitesse du véhicule à l'approche virtuel (4v) déterminée sur la base de l'environnement de course est déterminée à partir d'une limite de vitesse pour l'environnement de course et d'un élément variable dépendant de l'environnement de course, l'élément variable étant au moins un élément sélectionné parmi le groupe composé d'une forme de route, d'une catégorie de route, d'un nombre de voies, et d'une largeur de route.

5. Appareil de commande de conduite (10) pour un véhicule (1) selon l'une quelconque des revendications 1-4, dans lequel la seconde position latérale (P2) est le centre de voie.

FIG.1

CONTROL SYSTEM 10 1

16 17
INFORMATION ABOUT VEHICLES APPROACHING FROM BEHIND
STARTING CONTROL PART 18
VIRTUAL APPROACHING VEHICLE COMPUTATION

21
EXTERNAL SENSORS

11
COURSE ENVIRONMENT INFORMATION

13
VEHICLE MOVEMENT DETERMINATION PART

23
POSITIONING SYSTEM

33
STEERING UNIT

14
LATERAL CONTROL

34
DRIVING UNIT

22
INTERNAL SENSORS

12
VEHICLE INFORMATION

15
LONGITUDINAL CONTROL

35
BRAKING UNIT

# FIG.2

# FIG.3

EP 4 197 870 B1

# FIG.4

START — 100

ACQUIRE FORWARD COURSE ENVIRONMENT INFORMATION, REAR COURSE ENVIRONMENT INFORMATION, AND VEHICLE INFORMATION — 101

DECELERATE AND STOP ON SHOULDER — 116

VEHICLE APPROACHING FROM BEHIND EXIST? — 102
NO / YES

ESTIMATE DECELERATION OF VEHICLE APPROACHING FROM BEHIND — 103

START MOVING — 109

DRIVE ALONG FIRST LATERAL POSITION — 110

ESTIMATED DECELERATION LESS THAN THRESHOLD? — 104
NO / YES

VEHICLE APPROACHING FROM BEHIND WITH ESTIMATED DECELERATION EQUAL TO OR GREATER THAN THRESHOLD APPEAR? — 111
YES / NO

START MOVING — 105

ESTIMATE SPEED OF VIRTUAL VEHICLE APPROACHING FROM BEHIND — 112

DETERMINE DECELERATION OF VIRTUAL VEHICLE APPROACHING FROM BEHIND — 113

ESTIMATED CLOSEST INTERVEHICLE DISTANCE EQUAL TO OR GREATER THAN PRESCRIBED VALUE? — 114
NO / YES

CHANGE COURSE TO SECOND LATERAL POSITION — 115

DRIVE ALONG SECOND LATERAL POSITION — 106

REACHED TARGET SPEED? — 107
NO / YES

END — 108

14

# FIG.5

## (a)

## (b)

**REFERENCES CITED IN THE DESCRIPTION**

**Patent documents cited in the description**

- JP 2018197966 A

- US 2019375412 A1